# EUROPÄISCHE PATENTANMELDUNG

(11) **EP 2 805 754 A1**
(43) Veröffentlichungstag der Anmeldung: **26.11.2014**
(21) Anmeldenummer: 14163496.4
(22) Anmeldetag: 04.04.2014
(51) Int. Cl.: B01D 21/00, B01D 21/24, B01D 21/28, B01D 21/30, C02F 1/36

(54) **Sedimentationsvorrichtung zur Separation eines Materialgemischs und Verfahren zum Entfernen von Sediment aus einer Sedimentationsvorrichtung**

(30) Priorität: 21.05.2013 DE 102013209282
(71) Anmelder: Krones AG, 93073 Neutraubling (DE)
(72) Erfinder: Friedlaender, Thomas, 93073 Neutraubling (DE)
(74) Vertreter: Grünecker, Kinkeldey, Stockmair & Schwanhäusser

(57) **Zusammenfassung**

Die Erfindung betrifft eine Sedimentationsvorrichtung (1, 15, 29) zur Separation eines Materialgemischs, vorzugsweise von Kunststoffflocken, wobei die Sedimentationsvorrichtung umfasst: ein Sedimentationsbecken (2, 16, 30), das dazu ausgelegt ist, das Materialgemisch und eine Flüssigkeit, beispielsweise Wasser, aufzunehmen; einen Einlauf (5, 19, 34), der dazu ausgelegt ist, das Materialgemisch und/oder die Flüssigkeit in das Sedimentationsbecken einzubringen; einen Auslauf (7, 21, 36), der dazu ausgelegt ist, Sediment aus dem Sedimentationsbecken zu entfernen; mindestens ein Beruhigungsblech (10-14, 24-28, 39-43) innerhalb des Sedimentationsbeckens, wobei das mindestens eine Beruhigungsblech als Ultraschall-Schwingelement ausgeführt ist. Zudem betrifft die Erfindung ein Verfahren zum Entfernen von Sediment aus einer erfindungsgemäßen Sedimentationsvorrichtung.

## Beschreibung

Die Erfindung betrifft eine Sedimentationsvorrichtung zur Separation eines Materialgemischs gemäß dem Oberbegriff des Anspruchs 1 und ein Verfahren dazu gemäß dem Oberbegriff des Anspruchs 11.

### Stand der Technik

Es ist bekannt, dass schlecht sedimentierbare Feststoffe in großen Beruhigungsbehältern über längere Zeit sedimentiert werden. In dem Augenblick, in dem die Feststoffe abgezogen werden, erfolgt eine Rückverwirbelung in die Flüssigkeit, so dass sich die Notwendigkeit ergibt, das Sediment sich wieder beruhigen zu lassen. Um die Sedimentation zu unterstützen werden Beruhigungsbleche in die Flüssigkeit eingezogen.

Aus dem Bereich der Wasserwerkschlämme ist bekannt, dass eine Konditionierung von Wasserwerkschlämmen in stehenden Ultraschallfeldern zu einer verbesserten Sedimentation und zu einer schnelleren Klärung der fluiden Phase führt.

### Aufgabe

Aufgabe der Erfindung ist es eine Vorrichtung und ein Verfahren zur Verfügung zu stellen, wodurch eine optimale und zeitreduzierte Trennung zwischen Flüssigkeit und Sediment ermöglicht wird.

### Lösung

Die Aufgabe wird erfindungsgemäß gelöst durch die Sedimentationsvorrichtung gemäß Anspruch 1 und durch das Verfahren gemäß Anspruch 11. Bevorzugte Ausführungsformen sind in den Unteransprüchen offenbart.

Die Sedimentationsvorrichtung zur Separation eines Materialgemischs, vorzugsweise von Kunststoffflocken, umfasst ein Sedimentationsbecken, das dazu ausgelegt ist, das Materialgemisch und eine Flüssigkeit, beispielsweise Wasser, aufzunehmen. Zudem umfasst die Sedimentationsvorrichtung einen Einlauf, der dazu ausgelegt ist, das Materialgemisch und/oder die Flüssigkeit in das Sedimentationsbecken einzubringen, und einen Auslauf, der dazu ausgelegt ist, Sediment aus dem Sedimentationsbecken zu entfernen. Innerhalb des Sedimentationsbeckens ist mindestens ein Beruhigungsblech angeordnet, wobei das mindestens eine Beruhigungsblech als Ultraschall-Schwingelement ausgeführt ist.

Für die Erzeugung von Ultraschall werden die Ultraschall-Schwingelemente beispielsweise durch einen elektrischen Generator mit der entsprechenden Frequenz angeregt. Z.B. können piezoelektrische und/oder magnetostriktive Schwinger verwendet werden.

Das mindestens eine Ultraschall-Schwingelement unterstützt die Sedimentation und verringert eine Wiederverwirbelung von Sediment im Sedimentationsbecken, wenn Sediment durch den Auslauf entfernt wird. Somit kann die Zeit, die für das Absetzen und Entfernen von Sediment erforderlich ist, reduziert werden und zudem kann die Sedimentationsvorrichtung von der Baugröße her kleiner gewählt werden im Vergleich zu einer Sedimentationsvorrichtung ohne Ultraschall-Schwingbleche.

Der Ultraschall breitet sich in Form von Longitudinalwellen aus und bewirkt eine periodische Verdichtung und Entspannung in der Flüssigkeit. Es bilden sich mikroskopisch kleine Hohlräume in der Flüssigkeit (Kavitation) durch die Einwirkung eines Unterdrucks in der Entspannungsphase. Aufgrund lokaler Unterschreitung des Flüssigkeitsdampf- bzw. Gassättigungsdrucks bestehen die sich bildenden Kavitationsbläschen aus einem Flüssigkeitsdampf-Gasgemisch. Die Kavitationsblasen pulsieren zunächst in Resonanz mit der Ultraschallschwingung unter Zunahme ihres Volumens. Bei Erreichen einer kritischen Größe kommt es zum Blasenkollaps in der Druckphase. Diese Blasenimplosion ist durch hohe Druckunterschiede und einem extremen Temperaturanstieg in der Blase und ihrer unmittelbaren Umgebung gekennzeichnet. Durch die bei der Ultraschallkavitation ausgelösten hydromechanischen Kräfte können Materialflocken des Materialgemischs in einzelne Materialpartikel zerlegt werden.

Der Ausdruck Materialgemisch umfasst beispielsweise Kunststoffflocken unterschiedlicher Größe, wobei auch ein pulverförmiger Anteil, z.B. aus zerriebenen Kunststoffflocken, des Kunststoffs vorhanden sein kann. Das Materialgemisch kann beispielsweise aber auch verschiedene Kunststoffarten in Form von Kunststoffflocken verschiedener Größe und/oder eines pulverförmigen Anteils oder mehrerer pulverförmiger Anteile umfassen.

Zu Beginn einer Separation eines Materialgemischs kann mittels des Einlaufs beispielsweise das Materialgemisch und die Flüssigkeit in das Sedimentationsbecken eingebracht werden, so dass eine erste Füllung des Sedimentationsbeckens zur Verfügung steht. Wenn eine gewünschte Menge an Materialgemisch in dem Sedimentationsbecken vorhanden ist, kann das Einbringen von Materialgemisch durch den Einlauf gestoppt werden und nur noch Flüssigkeit wird in das Sedimentationsbecken eingebracht. Das Einbringen von Flüssigkeit kann mittels eines Ventils und das Einbringen von Materialgemisch kann mittels eines Schiebers gesteuert werden. Während der Separation, d.h. während des Absetzens von Sediment am Boden des Sedimentationsbeckens, ist der Auslauf vorteilhafterweise geschlossen. Zum Entfernen von Sediment kann der Auslauf geöffnet werden. Beim Entfernen des Sediments wird auch ein Teil der Flüssigkeit entfernt, die beispielsweise in dem Sediment gebunden ist und/oder zwischen Partikeln des Sediments eingelagert ist.

Die Sedimentationsvorrichtung kann weiter einen Zulauf umfassen, der dazu ausgelegt ist, die Flüssigkeit in das Sedimentationsbecken einzubringen. Dieser Zulauf kann zusätzlich zu dem Einlauf Flüssigkeit in das Sedimentationsbecken einbringen oder nur dieser Zulauf kann Flüssigkeit in das Sedimentationsbecken einbringen.

Ein Boden des Sedimentationsbeckens kann trichterförmig ausgebildet sein, wobei vorzugsweise der Auslauf im Trichtermund angeordnet ist. Durch die trichterartige Ausformung kann das Sediment durch die Schwerkraft in die Trichterspitze rutschen. Vorzugsweise beträgt die Neigung des Bodens zu der Horizontalen mehr als 60°. Weist die Neigung einen kleineren Wert auf, so kann zudem ein mechanischer Räumer vorgesehen sein, der das Sediment zu der Trichterspitze befördert.

Der Auslauf kann weiter einen Doppelschieber umfassen. Der Doppelschieber kann vorzugsweise einen ersten Schieber und einen zweiten Schieber umfassen. Der Auslauf kann zudem vorzugsweise vertikal nach unten gerichtet oder mit einer kleinen Neigung - beispielsweise 5°, 10°, 15° oder 20° - gegen die Vertikale geneigt sein, so dass ein Entfernen des Sediments durch die Schwerkraft unterstützt bzw. erfolgen kann. Damit sich Sediment in dem Sedimentationsbecken absetzten kann, ist vorzugsweise zumindest der erste Schieber geschlossen. Damit der Doppelschieber beim Entfernen des Sediments durch den Auslauf als eine Art Schleuse arbeiten kann, sind zunächst sowohl der erste als auch der zweite Schieber geschlossen. Zum Entfernen des Sediments wird dann der erste Schieber geöffnet und das Sediment in einen Raum zwischen dem ersten und dem zweiten Schieber verbracht, der erste Schieber geschlossen und anschließend der zweite Schieber geöffnet.

Zudem kann der Auslauf eine Schnecke umfassen. Die Schnecke kann ein Entfernen des Sediments durch den Auslauf unterstützen, so dass es nicht erforderlich ist, dass der Auslauf vertikal nach unten gerichtet oder mit einer kleinen Neigung - beispielsweise 5°, 10°, 15° oder 20° - gegen die Vertikale geneigt ist. Beispielsweise kann der Auslauf horizontal oder schräg nach oben verlaufen.

In einer anderen Ausführungsform kann die Sedimentationsvorrichtung weiter einen Sandeinlauf umfassen. Der Sand kann der Flüssigkeit und dem Materialgemisch in dem Sedimentationsbecken zugegeben werden, um eine verbesserte Sedimentation zu erreichen.

Für diese Ausführungsform der Sedimentationsvorrichtung kann ein Boden des Sedimentationsbeckens eben, d.h. vorzugsweise horizontal verlaufend, ausgebildet sein, wobei vorzugsweise der Auslauf in einer Seitenwand des Sedimentationsbeckens angeordnet ist. Auf dem ebenen Boden setzt sich der Sand zusammen mit dem Sediment ab, wobei der Sandanteil in dem Sediment auch für eine geringere Wiederverwirbelung des Sediments bei einem Entfernen von Sediment aus dem Sedimentationsbecken sorgt.

Der Auslauf kann weiter einen Förderer umfassen, wobei vorzugsweise auf dem Förderer Querrippen angeordnet sind. Das Sediment zusammen mit dem Sandanteil lässt sich gut mittels eines Förderers mit Querrippen durch den Auslauf entfernen. Vorzugsweise verläuft der Auslauf in diesem Fall horizontal oder schräg nach oben. Satt der Querrippen können auch andere dreidimensionale Strukturen, wie beispielsweise Waben, auf dem Förderer vorgesehen sein, die dazu geeignet sind, das Sediment zusammen mit dem Sandanteil aus dem Sedimentationsbecken zu entfernen.

Die Sedimentationsvorrichtung kann weiter einen Schieber umfassen, der am Boden des Sedimentationsbeckens angeordnet ist und der dazu ausgelegt ist, entlang des Bodens bewegt zu werden und Sediment zu dem Auslauf zu verbringen.

Die Sedimentationsvorrichtung kann weiter eine Steuervorrichtung umfassen, die dazu ausgelegt ist ein Einbringen von Flüssigkeit in das Sedimentationsbecken durch den Einlauf zu stoppen und ein Aussenden von Ultraschall durch das mindestens eine Beruhigungsblech innerhalb des Sedimentationsbeckens zu starten und danach ein Entfernen des Sediments aus dem Sedimentationsbecken durch den Auslauf zu starten. Zudem ist die Steuervorrichtung dazu ausgelegt, das Entfernen des Sediments aus dem Sedimentationsbecken durch den Auslauf zu stoppen und dann das Einbringen von Flüssigkeit in das Sedimentationsbecken durch den Einlauf zu starten und das Aussenden von Ultraschall durch das mindestens eine Beruhigungsblech innerhalb des Sedimentationsbeckens zu stoppen.

Durch die Steuervorrichtung kann somit vor dem Entfernen von Sediment die Flüssigkeitszufuhr gestoppt werden und durch das Starten des Aussendens von Ultraschall durch das mindestens eine Beruhigungsblech kann die Sedimentation unterstützt werden, so dass eine Rückverwirbelung von Sediment bei dem Entfernen von Sediment durch den Auslass vermindert bzw. unterbunden werden kann. Nach Beenden des Entfernens von Sediment kann das Aussenden von Ultraschall durch das mindestens eine Beruhigungsblech gestoppt werden, was eine längere Lebensdauer der Ultraschall-Schwingelemente gegenüber dem Dauerbetrieb bedeutet. Zudem wird das Einbringen von Flüssigkeit in das Sedimentationsbecken wieder aufgenommen.

Ein Verfahren zum Entfernen von Sediment aus einer Sedimentationsvorrichtung wie oben und/oder weiter unten beschrieben umfasst die folgenden Schritte: Stoppen eines Einbringens von Flüssigkeit durch den Einlauf in das Sedimentationsbecken und Starten von Aussenden von Ultraschall durch das mindestens eine Beruhigungsblech. Diese beiden Schritte können nacheinander oder gleichzeitig ausgeführt werden. In einem weiteren Schritt erfolgt danach ein Starten eines Entfernens von Sediment durch den Auslauf und im nächsten Schritt erfolgt ein Stoppen des Entfernens des Sediments durch den Auslauf. In zwei weiteren Schritten erfolgt ein Starten eines Einbringens von Flüssigkeit durch den Einlauf in das Sedimentationsbecken und ein Stoppen des Aussendens von Ultraschall durch das mindestens eine Beruhigungsblech. Diese beiden letztgenannten Schritte können nacheinander oder gleichzeitig ausgeführt werden.

Ein Stoppen des Entfernens von Sediment durch den Auslauf kann beispielsweise erfolgen, nachdem eine gewünschte Menge an Sediment entfernt wurde bzw. die Entfernung des Sediments über einen gewünschten Zeitraum erfolgt ist.

### Kurze Figurenbeschreibung

Weitere Vorteile und Ausführungsformen ergeben sich aus den beigefügten Zeichnungen. Darin zeigt:
- Figur 1: eine erste Ausführungsform einer Sedimentationsvorrichtung zur Separation von Material;
- Figur 2: eine zweite Ausführungsform einer Sedimentationsvorrichtung zur Separation von Material;
- Figur 3: eine dritte Ausführungsform einer Sedimentationsvorrichtung zur Separation von Material; und
- Figur 4: ein Flussdiagramm eines Verfahrens zum Entfernen von Sediment aus einer Sedimentationsvorrichtung.

### Ausführliche Figurenbeschreibung

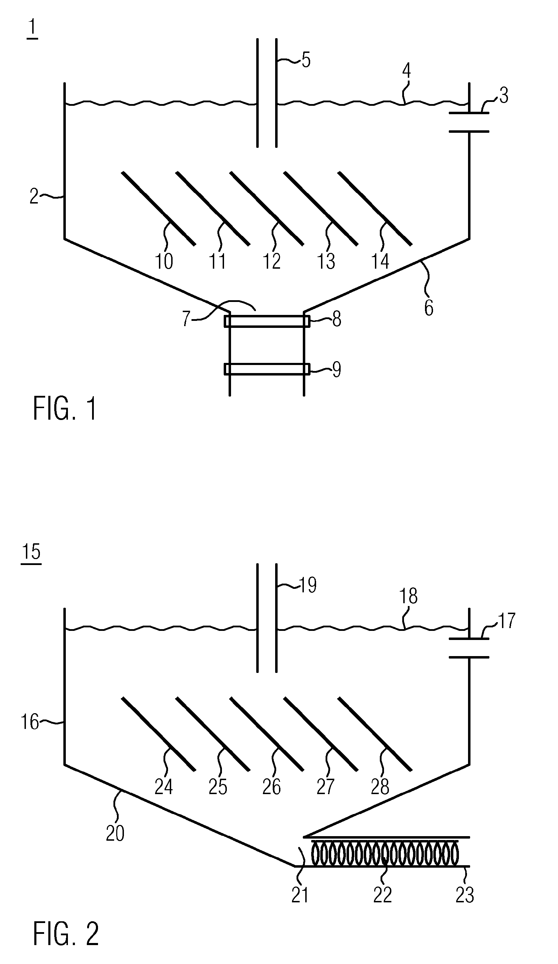

Figur 1 zeigt eine erste Ausführungsform einer Sedimentationsvorrichtung 1 zur Separation eines Materialgemischs. Die dargestellte Sedimentationsvorrichtung 1 umfasst ein Sedimentationsbecken 2 mit einem Zulauf 3 für Flüssigkeit, beispielsweise für Wasser, der an einer Seitenwand des Sedimentationsbeckens 2 angeordnet ist und sich für einen Betrieb des Sedimentationsbeckens 2 unterhalb der Oberfläche 4 der Mischung aus Flüssigkeit und des zu separierenden Materialgemischs befindet. Ein Einlauf 5 für das Materialgemisch und/oder die Flüssigkeit ist oberhalb des Sedimentationsbeckens 2 angeordnet, wobei sich die Öffnung unterhalb der Oberfläche 4 der Mischung aus Flüssigkeit und des zu separierenden Materialgemischs befindet.

Der Boden 6 des Sedimentationsbeckens 2 umfasst eine Schräge, die so angeordnet ist, dass das Sediment, das sich am Boden 6 ablagert bzw. dort sammelt, zu einem Auslauf 7 gelangt, der hier in der Mitte des Bodens 6 angeordnet ist und nach unten verläuft, so dass das Sediment mittels der Schwerkraft abgeführt werden kann. Der Auslauf 7 umfasst einen Doppelschieber 8, 9, der einen ersten Schieber 8 und einen zweiten Schieber 9 umfasst und daher als eine Art Schleuse arbeitet.

Innerhalb des Sedimentationsbeckens 2 sind zudem fünf Beruhigungsbleche 10, 11, 12, 13, 14 angeordnet, die als Ultraschall-Schwingelemente ausgeführt sind.

Figur 2 zeigt eine zweite Ausführungsform einer Sedimentationsvorrichtung 15 zur Separation eines Materialgemischs. Die dargestellte Sedimentationsvorrichtung 15 umfasst ein Sedimentationsbecken 16 mit einem Zulauf 17 für Flüssigkeit, beispielsweise für Wasser, der an einer Seitenwand des Sedimentationsbeckens 16 angeordnet ist und sich für einen Betrieb des Sedimentationsbeckens 16 unterhalb der Oberfläche 18 der Mischung aus Flüssigkeit und des zu separierenden Materialgemischs befindet. Der Einlauf 19 für das Materialgemisch und/oder die Flüssigkeit ist oberhalb des Sedimentationsbeckens 16 angeordnet, wobei sich die Öffnung unterhalb der Oberfläche 18 der Mischung aus Flüssigkeit und des zu separierenden Materialgemischs befindet.

Der Boden 20 des Sedimentationsbeckens 16 umfasst eine Schräge, die so angeordnet ist, dass das Sediment, das sich am Boden ablagert bzw. sammelt, zu einem Auslauf 21 gelangt, der hier in der Mitte des Bodens 20 angeordnet ist und schräg nach oben verläuft. Sediment, das sich in diesem Bereich ansammelt, kann mittels einer Schnecke 22 über ein Ausgangsrohr 23 abgeführt werden.

Innerhalb des Sedimentationsbeckens 16 sind zudem fünf Beruhigungsbleche 24, 25, 26, 27, 28 angeordnet, die als Ultraschall-Schwingelemente ausgeführt sind.

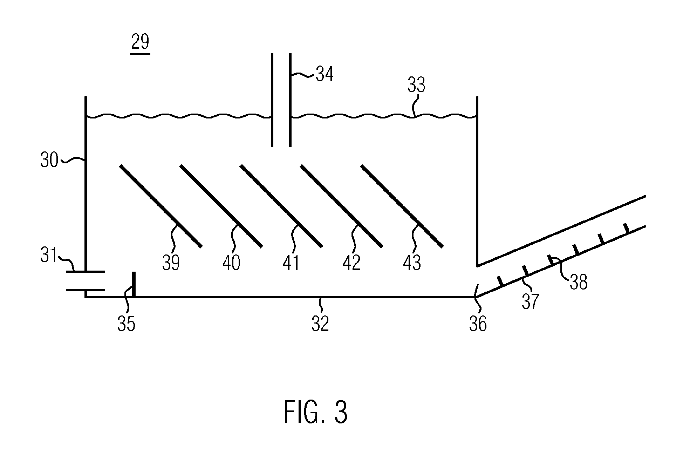

Figur 3 zeigt eine dritte Ausführungsform einer Sedimentationsvorrichtung 29 zur Separation eines Materialgemischs. Die dargestellte Sedimentationsvorrichtung 29 umfasst ein Sedimentationsbecken 30 mit einem Zulauf 31 für Flüssigkeit, beispielsweise für Wasser, der an einer Seitenwand des Sedimentationsbeckens 30 in der Nähe der Bodenfläche 32 angeordnet ist und sich für einen Betrieb des Sedimentationsbeckens 30 unterhalb der Oberfläche 33 der Mischung aus Flüssigkeit und des zu separierenden Materialgemischs befindet. Der Einlauf 34 für das Materialgemisch und/oder die Flüssigkeit ist oberhalb des Sedimentationsbeckens 30 angeordnet, wobei sich die Öffnung unterhalb der Oberfläche 33 der Mischung aus Flüssigkeit und des zu separierenden Materialgemischs befindet.

Der Boden 32 des Sedimentationsbeckens verläuft horizontal und mittels eines Schiebers 35 kann Sediment zu einem Ausfluss 36 geschoben werden, wo dieses Sediment dann mittels eines Förderers 37 mit Rippen 38 entfernt wird.

Innerhalb des Sedimentationsbeckens 30 sind zudem fünf Beruhigungsbleche 39, 40, 41, 42, 43 angeordnet, die als Ultraschall-Schwingelemente ausgeführt sind.

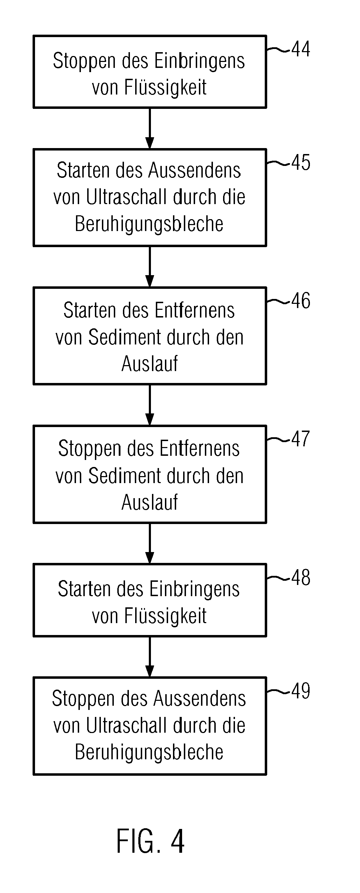

Figur 4 zeigt ein Flussdiagramm eines Verfahrens zum Entfernen von Sediment aus einer Sedimentationsvorrichtung 1, 15, 29. In einem ersten Schritt 44 wird ein Einbringen von Flüssigkeit in das Sedimentationsbecken 2, 16, 30 gestoppt und in einem zweiten Schritt 45 wird ein Aussenden von Ultraschall durch die Beruhigungsbleche 10-14, 24-28, 39-43 gestartet. Der erste Schritt 44 und der zweite Schritt 45 können auch in umgekehrter Reihenfolge erfolgen oder gleichzeitig vorgenommen werden.

In einem dritten Schritt 46 wird ein Entfernen von Sediment durch den Auslauf 7, 21, 36 gestartet. Nachdem eine gewünschte Menge an Sediment entfernt wurde bzw. die Entfernung des Sediments über einen gewünschten Zeitraum erfolgt ist, wird das Entfernen des Sediments durch den Auslauf 7, 21, 36 in einem vierten Schritt 47 gestoppt.

In einem fünften Schritt 48 wird ein Einbringen von Flüssigkeit in das Sedimentationsbecken 2, 16, 30 gestartet, und in einem sechsten Schritt 49 wird das Aussenden von Ultraschall durch die Beruhigungsbleche 10-14, 24-28, 39-43 gestoppt. Der fünfte Schritt 48 und der sechste Schritt 49 können auch in umgekehrter Reihenfolge erfolgen oder gleichzeitig vorgenommen werden.

## Patentansprüche

1. Sedimentationsvorrichtung (1, 15, 29) zur Separation eines Materialgemischs, vorzugsweise von Kunststoffflocken, wobei die Sedimentationsvorrichtung (1, 15, 29) umfasst:
- ein Sedimentationsbecken (2, 16, 30), das dazu ausgelegt ist, das Materialgemisch und eine Flüssigkeit, beispielsweise Wasser, aufzunehmen,
- einen Einlauf (5, 19, 34), der dazu ausgelegt ist, das Materialgemisch und/oder die Flüssigkeit in das Sedimentationsbecken (2, 16, 30) einzubringen,
- einen Auslauf (7, 21, 36), der dazu ausgelegt ist, Sediment aus dem Sedimentationsbecken (2, 16, 30) zu entfernen,
- mindestens ein Beruhigungsblech (10, 11, 12, 13, 14, 24, 25, 26, 27, 28, 39, 40, 41, 42, 43) innerhalb des Sedimentationsbeckens (2, 16, 30),
**dadurch gekennzeichnet, dass**
das mindestens eine Beruhigungsblech (10-14, 24-28, 39-43) als Ultraschall-Schwingelement ausgeführt ist.

2. Die Sedimentationsvorrichtung nach Anspruch 1, wobei die Sedimentationsvorrichtung (1, 15, 29) weiter einen Zulauf (3, 17, 31) umfasst, der dazu ausgelegt ist, die Flüssigkeit in das Sedimentationsbecken (2, 16, 30) einzubringen.

3. Die Sedimentationsvorrichtung nach Anspruch 1 oder 2, wobei ein Boden (6, 20) des Sedimentationsbeckens (2, 16) trichterförmig ausgebildet ist, wobei vorzugsweise der Auslauf (7, 21) im Trichtermund angeordnet ist.

4. Die Sedimentationsvorrichtung nach Anspruch 3, wobei der Auslauf (7) weiter einen Doppelschieber (8, 9) umfasst, der vorzugsweise einen ersten Schieber (8) und einen zweiten Schieber (9) umfasst.

5. Die Sedimentationsvorrichtung nach Anspruch 3 oder 4, wobei der Auslauf (21) weiter eine Schnecke (22) umfasst.

6. Die Sedimentationsvorrichtung nach Anspruch 1 oder 2, wobei die Sedimentationsvorrichtung (29) weiter einen Sandeinlauf umfasst.

7. Die Sedimentationsvorrichtung nach Anspruch 6, wobei ein Boden des Sedimentationsbeckens (30) eben ausgebildet ist, wobei vorzugsweise der Auslauf (36) in einer Seitenwand des Sedimentationsbeckens (30) angeordnet ist.

8. Die Sedimentationsvorrichtung nach Anspruch 6 oder 7, wobei der Auslauf (36) weiter einen Förderer (37) umfasst, wobei vorzugsweise auf dem Förderer (37) Querrippen (38) angeordnet sind.

9. Die Sedimentationsvorrichtung nach einem der Ansprüche 6 bis 8, wobei die Sedimentationsvorrichtung (29) weiter einen Schieber (35) umfasst, der am Boden (32) des Sedimentationsbeckens (30) angeordnet ist und der dazu ausgelegt ist, entlang des Bodens (32) bewegt zu werden und Sediment zu dem Auslauf (36) zu verbringen.

10. Die Sedimentationsvorrichtung nach einem der Ansprüche 1 bis 9, wobei die Sedimentationsvorrichtung (1, 15, 29) weiter eine Steuervorrichtung umfasst, die dazu ausgelegt ist:
ein Einbringen von Flüssigkeit in das Sedimentationsbecken (2, 16, 30) durch den Einlauf (3, 17, 31) zu stoppen und ein Aussenden von Ultraschall durch das mindestens eine Beruhigungsblech (10-14, 24-28, 39-43) innerhalb des Sedimentationsbeckens (2, 16, 30) zu starten und danach ein Entfernen des Sediments aus dem Sedimentationsbecken (2, 16, 30) durch den Auslauf (7, 21, 36) zu starten;
das Entfernen des Sediments aus dem Sedimentationsbecken (2, 16, 30) durch den Auslauf (7, 21, 36) zu stoppen und dann das Einbringen von Flüssigkeit in das Sedimentationsbecken (2, 16, 30) durch den Einlauf (3, 17, 31) zu starten und das Aussenden von Ultraschall durch das mindestens eine Beruhigungsblech (10-14, 24-28, 39-43) innerhalb des Sedimentationsbeckens (2, 16, 30) zu stoppen.

11. Ein Verfahren zum Entfernen von Sediment aus einer Sedimentationsvorrichtung (1, 15, 29) nach einem der Ansprüche 1 bis 10, wobei das Verfahren die folgenden Schritte umfasst:
- Stoppen (44) eines Einbringens von Flüssigkeit durch den Einlauf (3, 17, 31) in das Sedimentationsbecken (2, 16, 30);
- Starten (45) von Aussenden von Ultraschall durch das mindestens eine Beruhigungsblech (10-14, 24-28, 39-43);
- danach Starten (46) eines Entfernens von Sediment durch den Auslauf (7, 21, 36);
- Stoppen (47) des Entfernens des Sediments durch den Auslauf (7, 21, 36);
- Starten (48) eines Einbringens von Flüssigkeit durch den Einlauf (3, 17, 31) in das Sedimentationsbecken (2, 16, 30);
- Stoppen (49) des Aussendens von Ultraschall durch das mindestens eine Beruhigungsblech (10-14, 24-28, 39-43).
